# EUROPÄISCHE PATENTSCHRIFT

(11) **EP 1 192 234 B1**
(45) Veröffentlichungstag und Bekanntmachung des Hinweises auf die Patenterteilung: **30.12.2009**
(21) Anmeldenummer: 00954424.8
(22) Anmeldetag: 27.06.2000
(51) Int. Cl.: C10B 49/16, C10B 57/18, C10K 3/02, C10J 3/12, C10J 3/20

(54) **VERFAHREN UND VORRICHTUNG ZUR PYROLYSE UND VERGASUNG VON ORGANISCHEN STOFFEN ODER STOFFGEMISCHEN**
METHOD AND DEVICE FOR PYROLYZING AND GASIFYING ORGANIC SUBSTANCES OR SUBSTANCE MIXTURES
PROCEDE ET DISPOSITIF DE PYROLYSE ET DE GAZEIFICATION DE SUBSTANCES ORGANIQUES OU DE MELANGES DE SUBSTANCES ORGANIQUES

(30) Priorität: 30.06.1999 DE 19930071
(43) Veröffentlichungstag der Anmeldung: 03.04.2002
(73) Patentinhaber: Herhof Verwaltungsgesellschaft mbH, 35606 Solms-Niederbiel (DE)
(72) Erfinder: KRUMM, Wolfgang, D-57482 Wenden (DE); FUNK, Günter, D-57076 Siegen (DE); HAMEL, Stefan, D-57482 Wenden (DE)
(74) Vertreter: Zinnecker, Armin
(86) Internationale Anmeldenummer: PCT/EP2000/005953
(87) Internationale Veröffentlichungsnummer: WO 2001/002513

(56) Entgegenhaltungen:
- WO-A-99/31197
- US-A- 4 047 883
- US-A- 4 244 779

## Beschreibung

Die Erfindung betrifft ein Verfahren zur Pyrolyse und Vergasung von organischen Stoffen oder Stoffgemischen und eine Vorrichtung zur Durchführung eines derartigen Verfahrens.

Für die Behandlung und Nutzung organischer Stoffe und Stoffgemische durch zum Beispiel Vergasung und Pyrolyse sind eine Reihe von Verfahren bekannt. Die Verfahren unterscheiden sich nach dem verwendeten Oxidations- bzw. Reduktionsgas, sowie nach der Art des Kontaktes zwischen Feststoff und Gas. Nach der Feststoff- und Gasführung unterscheidet man unter anderem zirkulierende Wirbelschichtvergaser, Flugstromvergaser, Drehrohrvergaser und Wanderbettvergaser mit Gegenstrom-, Gleichstrom- oder Querstromgasführung. Die Mehrzahl der bekannten Vergasungsverfahren ist aufgrund des hohen apparativen Aufwandes nicht für kleinere, dezentrale Anlagen geeignet. Kleinere dezentrale Anlagen empfehlen sich insbesondere bei Verwendung des Einsatzstoffes Biomasse.

Das Betriebsverhalten von Vergasungsverfahren nach dem Prinzip der zirkulierenden Wirbelschicht ist stark vom jeweiligen Korngrößenhaushalt der Wirbelschicht abhängig, bestehend aus dem zu vergasenden Einsatzstoff und dem ebenfalls zirkulierenden Inertmaterial. Daraus ergeben sich entsprechende Anforderungen an die Stückgröße des Einsatzmaterials. Noch weitaus höhere Anforderungen an die Aufbereitung des Brennstoffs ergeben sich im Fall der Flugstromvergasung, die lediglich den Einsatz feingemahlener Brennstoffkörner erlaubt.

Weitere wesentliche Nachteile der bekannten Vergasungsverfahren bestehen darin, daß die ablaufenden Prozesschritte Trocknung, Entgasung, Vergasung und Verbrennung des Einsatzstoffes in unmittelbar nebeneinander liegenden Zonen, die ineinander übergehen, abläuft. Dadurch sind die einzelnen Zonen innerhalb eines Reaktors unbestimmt und Entgasung, Vergasung und Verbrennung können örtlich unvollständig ablaufen. In weiteren bekannten Verfahren wird versucht diese Nachteile durch die Trennung der einzelnen am Brennstoff ablaufenden Prozeßschritte Entgasung, Vergasung und Verbrennung aufzuheben.

In der DE 197 20 331 A1 werden ein Verfahren und eine Vorrichtung zur Vergasung oder Verbrennung von trockener oder feuchter, feinkörniger oder stückiger Biomasse sowie von Abfall vorgeschlagen, bei dem durch die heiße Wandung eines Verbrennungsofens und durch das Einströmen heißen Abgases aus dem Verbrennungsofen in einen Entgasungsofen biologische Rohstoffe in diesem entgasen, wodurch Koks und Pyrolysegas entstehen, wobei der Koks nach Passieren des Zerkleinerers auf das Glutbett des Vergasungsreaktors gelangt, während das Pyrolysegas im Verbrennungsraum des Vergasungsreaktors unter Zuführung einer begrenzten Luftmenge verbrennt und das entstehende Abgas nachfolgend durch das Glutbett des Vergasungsreaktors strömt, in dem eine Oxidation des Kohlenstoffs zu CO bei gleichzeitiger Reduktion von Abgas (CO₂) und Wasserdampf (H₂O) zu einem brennbarem Schwachgas (CO, H₂) stattfindet. Dadurch, dass die Pyrolyse durch die Erwärmung aufgrund des Kontaktes mit heißen Verbrennungsabgasen durchgeführt wird und desweiteren eine Teilverbrennung des Pyrolysegases durchgeführt wird, ist mit dem in der DE 197 20 331 A1 vorgeschlagenen Verfahren lediglich ein Produktgas mit geringem Heizwert herzustellen. Bei Verwendung von Brennstoffen mit hohem Gehalt an flüchtigen Bestandteilen und geringer Pyrolysekoksausbeute besteht die Gefahr einer unzureichenden Ausbildung des aus Pyrolysekoks bestehenden Glutbetts des Vergasungsreaktors, wodurch die Oxidation des Kohlenstoffs zu CO bei gleichzeitiger Reduktion von Abgas und Wasserdampf zu einem brennbaren Schwachgas auf Kosten des Produktgasheizwertes unzureichend abläuft.

Aus der US 4,568,362 ist weiterhin ein Verfahren zur Vergasung von organischen Stoffen und Stoffgemischen bekannt, bei dem die organischen Stoffe in einen Pyrolysereaktor geleitet werden, in dem die organischen Stoffe mit einem Wärmeträgermedium in Kontakt kommen, wodurch eine schnelle Pyrolyse stattfindet, die die organischen Stoffe in Pyrolyseprodukte umsetzt, die aus Pyrolysegasen mit kondensierbaren Stoffen und einem festen kohlenstoffhaltigen Rückstand bestehen und die nötige Wärmeenergie für die Pyrolyse durch Verbrennen des festen kohlenstoffhaltigen Rückstandes in einem Verbrennungsreaktor erzeugt wird und die teerhaltigen Pyrolysegase in einer zweiten Reaktionszone des Pyrolysereaktors derart Crackreaktionen und Reaktionen mit Wasserdampf unterworfen werden, dass ein Produktgas mit hohem Heizwert erhalten wird. Bei diesen Verfahren erfolgt sowohl die Pyrolyse, als auch die Verbrennung des festen kohlenstoffhaltigen Rückstands in einer Wirbelschicht. In dem oberen Teil der Pyrolysewirbelschicht ist eine Reaktionszone für die teerhaltigen Pyrolysegase vorgesehen. Das Betreiben der Wirbelschichten ist sehr aufwendig und eine Steuerung der Reaktionen der Pyrolysegase in der Reaktionszone ist kaum möglich.

Die WO 99/31197 offenbart ein Verfahren und eine Vorrichtung zur Vergasung von organischen Stoffen, bei dem die organischen Stoffe in einem Pyrolysereaktor mit heißem, aus einer Feuerung rezirkuliertem Wärmeträgermaterial in Kontakt gebracht und pyrolysiert werden. Die festen Pyrolyserückstände werden zusammen mit dem Wärmeträgermaterial in die Feuerung überführt. Die teerhaltigen Pyrolysegase werden in einer zweiten Reaktionszone zu einem Produktgas mit hohem Heizwert umgesetzt. Die Umsetzung zum Produktgas wird dabei in einem indirekten Wärmetauscher, gegebenenfalls unter Zugabe eines Reaktionsmittels, durchgeführt, wobei der Wärmeinhalt der Feuerungsabgase für die chemische Reaktion ausgenutzt wird. Die Verbrennung wird in einer Rostfeuerung durchgeführt. Ein Verfahren, bei dem die Pyrolyse und die Verbrennung des festen kohlenstoffhaltigen Rückstands in einer Wirbelschicht durchgeführt werden, wird als sehr aufwendig bezeichnet und abgelehnt.

Aus der US-A-4 244 779 ist ein Verfahren und eine Vorrichtung für die thermische Zersetzung organischer Materialien bekannt, wobei das organische Material mit heißem rezirkuliertem Feststoff aus einer Verbrennungswirbelschicht in Kontakt gebracht und dabei pyrolysiert wird. Die festen Pyrolyseprodukte werden in die Verbrennungswirbelschicht überführt und verbrannt, die Pyrolysegase werden abgezogen und einer Gasreinigung unterworfen.

Der Erfindung liegt die Aufgabe zugrunde, ein einfach durchzuführendes Verfahren zur Pyrolyse und Vergasung von organischen Stoffen oder Stoffgemischen und eine Vorrichtung zur Erzeugung eines Gases mit hohem Heizwert zur Verfügung zu stellen. Diese Aufgaben werden durch die Merkmale der Patentansprüche 1 und 15 gelöst. Vorteilhafte Ausgestaltungsforrnen und Weiterbildungen der Erfindung ergeben sich bei der Nutzung der in den untergeordneten Ansprüchen genannten Merkmale.

Bei einem Verfahren zur Pyrolyse und Vergasung von organischen Stoffen oder Stoffgemischen wird diese Aufgabe erfindungsgemäß dadurch gelöst, dass die Pyrolyse in einem Wanderbettreaktor oder einem Drehrohrreaktor durchgeführt wird, den Pyrolysegasen gegebenenfalls ein Reaktionsmittel, z.B. Wasserdampf und/oder Sauerstoff, zugegeben wird, und sie in eine Reaktionszone geleitet werden, in der die Pyrolysegase mit dem Reaktionsmittel reagieren. Der feste kohlenstoffhaltige Rückstand und gegebenenfalls ein Anteil des Pyrolysegases werden allein oder zusammen mit dem Wirbelbettmaterial einem Wirbelschichtverbrennungsreaktor zugeführt und dort verbrannt. Hierdurch wird das Wirbelbettmaterial aufgeheizt. Die Verbrennungsabgase und das Wirbelbettmaterial werden derart mit der Reaktionszone in Kontakt gebracht, dass deren Wärmeinhalt für die Reaktion der Pyrolysegase mit dem Reaktionsmittel verwendet werden kann. Aus dem Wirbelschichtverbrennungsreaktor abgezogenes Wirbelbettmaterial bestehend aus Asche, unverbranntem Koks und gegebenenfalls zusätzlich zugeführten feuerfestem Wirbelbettmaterial, wird als Wärmeträgermedium dem Pyrolysereaktor zurückgeführt. Die Wärmeübertragung an den Einsatzstoff zur Durchführung der Pyrolyse erfolgt dabei durch Kontakt mit dem Wirbelbettmaterial und gegebenenfalls zusätzlich durch die heiße Wandung des Wirbelschichtverbrennungsreaktors.

Das dem Pyrolysereaktor aus der Verbrennungswirbelschicht zugeführte heiße Wirbelbettmaterial bewirkt durch Kontakt eine schnelle Trocknung und Pyrolyse des Einsatzstoffes. Als Reaktor bietet sich ein Schachtofen an, bei dem das Gemisch aus dem Einsatzstoff und dem Wirbelbettmaterial von oben nach unten durch den Schachtofen wandert. Um den Feststofftransport durch den Schachtofen zu gewährleisten, können entsprechend des Standes der Technik Einbauten, Förderwendeln oder Rührwerke vorgesehen werden. Der Pyrolysereaktor kann beispielsweise auch als Drehrohrreaktor ausgeführt werden, wodurch eine gute Durchmischung von Einsatzstoff und heißem Wirbelbettmaterial erreicht und gleichzeitig der Feststofftransport gewährleistet wird. Der während der Trocknung dem Einsatzstoff entwichene Wasserdampf und die Pyrolysegase verlassen den Pyrolysereaktor und gelangen in eine weitere Reaktionszone. Die Mischung aus dem verbleibenden festen kohlenstoffhaltigen Pyrolyserückstand und dem Wirbelbettmaterial wird zusammen in die Verbrennungswirbelschicht gefördert, wobei auf konventionelle Bauteile wie zum Beispiel Förderschnecken oder Zellradschleusen mit Schrägrohreintrag zurückgegriffen werden kann. In der erfindungsgemäßen Vorrichtung wird eine Schnecke bevorzugt.

Dadurch, dass die Pyrolyse vorzugsweise in einem Schachtofen durchgeführt wird, kann auf die für eine Pyrolysewirbelschicht notwendige Zufuhr eines Fluidisierungsmediums verzichtet werden. Dadurch besteht die Möglichkeit die Pyrolyse völlig unter Verzicht auf Gaszufuhr durchzuführen oder, im Gegensatz zu einer Pyrolysewirbelschicht, der zur Fluidisierung eine Mindestmenge Gas zugeführt werden muß, beliebig geringe Mengen beispielsweise des Produktgases oder eines Reaktionsmittels wie Wasserdampf, Sauerstoff oder Luft zuzugeben. Dadurch besteht die Möglichkeit als verfahrenstechnische Anpassung an den jeweiligen Einsatzstoff Gas oder ein Reaktionsmittel dem Pyrolysereaktor zuzugeben. Im erfindungsgemäßen Verfahren wird die Pyrolyse im Pyrolysereaktor vorzugsweise unter Luft- und Gasausschluß durchgeführt. Ein weiterer Vorteil der Durchführung der Pyrolyse in einem separaten Verfahrensschritt besteht darin, dass der während der Pyrolyse auftretende Zerkleinerungseffekt aufgrund der Schwelung und Entgasung den Einsatz von gröberem stückigem, als üblicherweise in Wirbelschichtreaktoren eingesetztem, Gut ermöglicht. Alternativ besteht die Möglichkeit, der Eintragsvorrichtung für den festen kohlenstoffhaltigen Pyrolyserückstand und das Wirbelbettmaterial in die Verbrennungswirbelschicht eine Zerkleinerungsvorrichtung, wie beispielsweise einen Walzenbrecher, vorzuschalten, womit die Anforderungen an die Einsatzstoffpartikelgrößen weiter reduziert werden können. Die zur Zerkleinerung von Pyrolysekoks aufzubringende Energie ist dabei wesentlich geringer als die zur Zerkleinerung von z.B. Biomasse wie Holz.

Der kohlenstoffhaltige feste Pyrolyserückstand wird in der Wirbelschicht mit Luft verbrannt, wird dadurch als Asche selbst zum Wirbelbettmaterial und heizt durch die Energiefreisetzung schon vorhandenes Wirbelbettmaterial weiter bzw. wieder auf. Die Verbrennungswirbelschicht kann nach dem Kenntnisstand der Wirbeischichttechnik ausgelegt und betrieben werden. Im Hinblick auf die Emissionen der Verbrennungswirbelschicht kann eine gestufte Luftzugabe vorteilhaft sein. Der Verbrennungsreaktor wird als stationäre Wirbelschicht ausgebildet, dass heißt die Gasmenge des Wirbelmediums muß einerseits ausreichend sein, um die minimale Fluidisierungsgeschwindigkeit des Feststoffs zu überschreiten und darf andererseits die Geschwindigkeit für den Austrag nicht überschreiten. Ab einer Wirbelbetthöhe von ca. 2,5 m bis 3 m sind Einbauten zur Verhinderung der Ausbildung einer stoßenden Wirbelschicht und der damit einhergehenden Druckpulsationen erforderlich. Das durch den Verbrennungsvorgang aufgeheizte Wirbelbettmaterial wird schließlich wieder dem Pyrolysereaktor zugeführt. Das Wirbelbettmaterial besteht aus der Asche, die aus der Verbrennung des festen kohlenstoffhaltigen Pyrolyserückstandes verbleibt. Findet eine unvollständige Verbrennung des Pyrolysekokses innerhalb der Verbrennungswirbelschicht statt, besteht das Wirbelbettmaterial, welches als Wärmeträgermedium im Kreislauf geführt wird, aus der Asche des Einsatzstoffes und unverbranntem kohlenstoffhaltigem Pyrolyserückstand. Da die festen Pyrolyserückstände der organischen Stoffe und Stoffgemische sich in der Verbrennungswirbelschicht in der Regel schnell umsetzen und teilweise nur geringe Anteile an nicht vergas- oder verbrennbarem Material besitzen können, ist es gegebenenfalls notwendig, zusätzliches Material zur Ausbildung einer Wirbelschicht zuzugeben. Zusätzliches Material braucht nicht zugegeben werden, wenn die Einsatzstoffe große Mengen an nicht vergas- oder verbrennbarem Material mitbringen, die sich zum Aufbau einer Wirbelschicht eignen. Als zuzugebendes Material, das zur Ausbildung einer Wirbelschicht dient, eignen sich alle feuerfesten Materialien, wie beispielsweise Sand mit einem Korndurchmesser kleiner 1,5 mm. Die Entnahme des heißen Wirbelbettmaterials und der Transport in den Pyrolysereaktor wird vorzugsweise mittels eines oder mehrerer Überläufe bewerkstelligt, die an der Reaktorwand vorgesehen sind oder durch die Reaktorwand in die Wirbelschicht hineinragen. Die Methode hat den Vorteil, dass neben der Übermittlung des heißen Wirbelbettmaterials in den Pyrolysereaktor auf einfache Weise die Wirbelbetthöhe der Verbrennungswirbelschicht eingestellt werden kann. Der Abzug des Wirbelbettmaterials kann auch mittels anderer bekannter Förderaggregate, wie beispielsweise einer Förderschnecke, vorgenommen werden, allerdings ist der verfahrenstechnische Aufwand in diesem Fall höher.

Die Erfindung basiert auf dem Grundgedanken das Verfahren in einfach durchzuführende Verfahrensstufen zu gliedern. Die einzelnen Verfahrensstufen und deren Zusammenspiel können unter Berücksichtigung der speziellen Eigenschaften des Einsatzstoffes und hinsichtlich der beabsichtigten zu erzielenden Produktgasqualität entsprechend optimal ausgelegt werden.

Durch die im folgenden beschriebenen Zeichnungen, in der beispielhaft bevorzugte Ausführungsformen der Erfindung dargestellt sind, zeigen sich weitere Vorteile der Erfindung. In der Zeichnung zeigt
- Fig, 1: die Massen- und Energieströme der Pyrolysestufe, der Reaktionszone und der Verbrennungswirbelschicht des erfindungsgemäßen Verfahrens,
- Fig. 2: ein Ausführungsbeispiel des erfindungsgemäßen Verfahrens in einer schematischen Darstellung und
- Fig. 3: ein Ausführungsbeispiel der erfindungsgemäßen Vorrichtung in einer schematischen Darstellung.

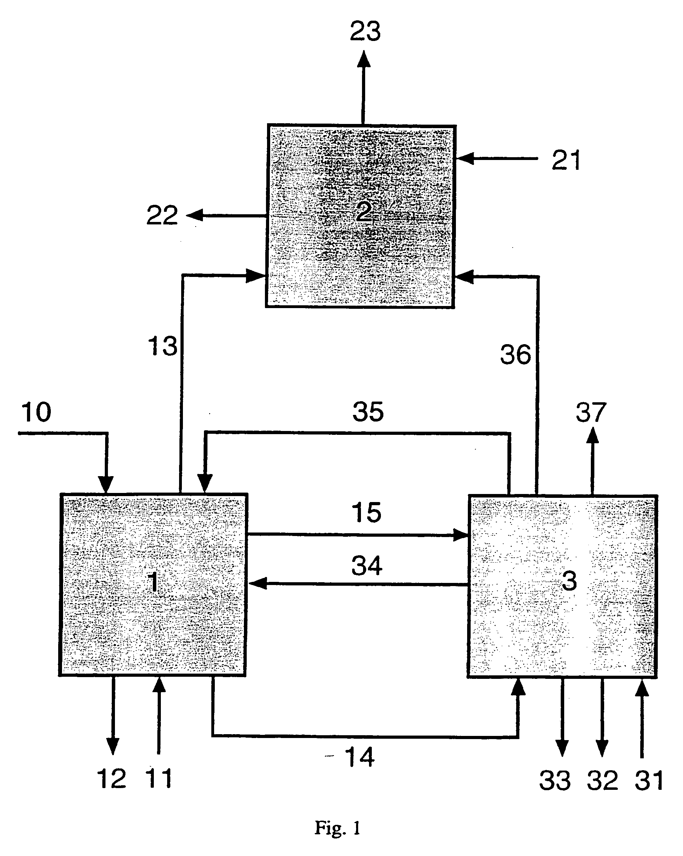

Aus Figur 1 ist ersichtlich, daß in die Pyrolysestufe 1 Einsatzstoff 10 und Wirbelbettmaterial 35 als Wärmeträger zugeführt wird. Der mit dem Wirbelbettmaterial 35 transportierte Wärmestrom ergibt sich aus der Temperatur der Verbrennungswirbelschicht, aus der Beschaffenheit und dem Massenstrom des Wirbelbettmaterials 35 und des Einsatzstoffstroms 10 sowie aus der angestrebten Pyrolysetemperatur. Desweiteren wird ein Reaktionsmittel 11 zugeführt sowie ein Wärmestrom 34 aus der Verbrennungswirbelschicht 3 übertragen. Die Pyrolysestufe 1 verläßt Pyrolysegas 13, das in die Reaktionszone 2 geführt wird, Pyrolysegas 15, das in den Verbrennungsreaktor (zur Verbrennungswirbelschicht 3) geführt wird, ein Gemisch aus Wirbelbettmaterial und festem kohlenstoffhaltigem Pyrolyserückstand 14 sowie ein Wärmeverluststrom 12.

Das Gemisch aus Wirbelbettmaterial und festem kohlenstoffhaltigem Pyrolyserückstand 14 wird in die Verbrennungswirbelschicht 3 zusammen mit Pyrolysegas 15 und Luft 31 geführt. Das durch die Verbrennung aufgeheizte Wirbelbettmaterial 35 wird zurück in den Pyrolysereaktor 1 geführt. Das ebenfalls heiße Abgas 37 verläßt die Verbrennungswirbelschicht 3. Ein Teil der im Abgas enthaltenen Wärme 36 wird an die Reaktionszone 2 übertragen. Den Verbrennungsreaktor 3 verläßt weiterhin ein Wärmeverluststrom 33 sowie Wirbelbettmaterial 32, das entnommen werden muß, um im stationären Betrieb den Gesamtfeststoffhaushalt zu regulieren.

Das der Reaktionszone 2 zugeführte Pyrolysegas 13 wird zusammen mit dem Reaktionsmittel 21 mit Hilfe der zugeführten Wärme 36 in Gegenwart eines Katalysators zum Produktgas 23 umgesetzt. Das Produktgas 23 und ein Wärmeverluststrom 22 verlassen schließlich die Reaktionszone 2.

### Ausführungsbeispiel

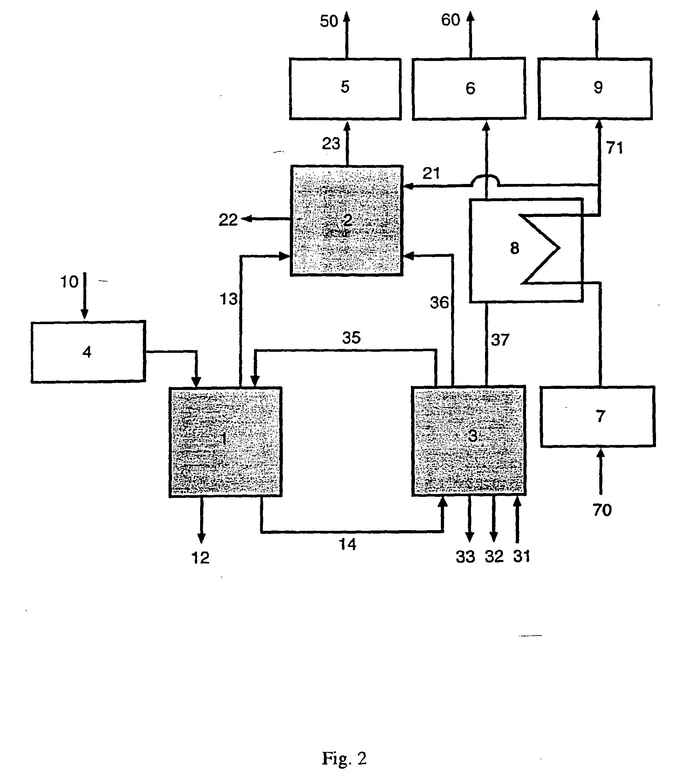

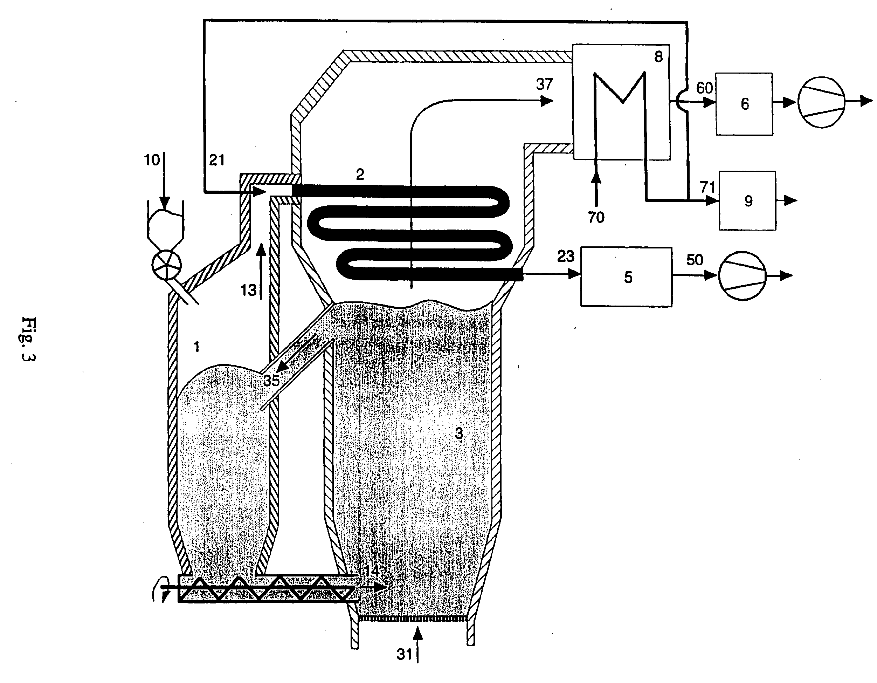

Im folgenden Beispiel wird die bevorzugte Ausführung des erfindungsgemäßen Verfahrens und der erfindungsgemäßen Vorrichtung beschrieben. Das bevorzugte Verfahren gemäß Fig. 2 und die bevorzugte Vorrichtung gemäß Fig. 3 dient zur Pyrolyse und Vergasung von 900 kg Holz je Stunde. Das beispielhaft eingesetzte Holz besteht im wesentlichen aus 52,3 Gew.-% Kohlenstoff, 5,9 Gew.-% Wasserstoff und 41,8 Gew.-% Sauerstoff jeweils bezogen auf die wasser- und aschefreie Brennstoffsubstanz und besitzt weiterhin einen Ascheanteil von 0,51 Gew.-% bezogen auf den rohen Einsatzstoff. Der Heizwert des Holzes beträgt Hᵤ = 17,2 MJ/kg bezogen auf den wasserfreien Zustand, die thermische Vergaserleistung beträgt somit 3,92 MW.

In der in Figur 2 beschriebenen bevorzugten Ausführung des Verfahrens zur Holzvergasung wird Holz 10 in einer Aufbereitungsstufe 4 je nach Beschaffenheit des Einsatzstoffes einer Zerkleinerung und/oder Trocknung unterzogen, bevor es in die Pyrolysestufe 1 gegeben wird. Das Holz besitzt nach der Aufbereitungsstufe 4 einen Wassergehalt von 8,9 Gew.-%.

Die Pyrolyse wird bei einer Temperatur von 580°C durchgeführt. Das in den Pyrolysereaktor 1 eingebrachte Wirbelbettmaterial 35 hat eine Temperatur von 900°C, so dass um den Einsatzstoff auf die Pyrolysetemperatur von 580°C aufzuheizen die 4,1-fache Menge Wirbelbettmaterial, also 3,7 t/h, zugeführt und sich im Umlauf befinden muß. Bei der Pyrolyse des Holzes verbleiben schließlich 20,3 Gew.-% (bezogen auf Brennstoff roh) als fester Pyrolyserückstand, der einen Heizwert von Hᵤ = 30 MJ/kg besitzt. Die restlichen Produkte aus der Trocknung und Pyrolyse verlassen den Pyrolysereaktor 1 als Gas 13 und gelangen in die Reaktionszone 2. Das Gemisch aus festem Pyrolyserückstand und Wirbelbettmaterial 14 wird der Verbrennungswirbelschicht 3 zugeführt und dort mit Luft 31 verbrannt. Der mit dem festen Pyrolyserückstand des Holzes der Verbrennungswirbelschicht zugeführte Enthalpiestrom beträgt 1,52 MW. Im vorliegenden Beispiel verbleibt in der Verbrennungswirbelschicht 3 nach Abzug des Wärmeverlustes 33, des abgezogenen Wirbelbettmaterials 32, des Wirbelbettmaterials 35 und der auf die Reaktionszone 2 übertragenen Energiemenge 36 ein an den Rauchgasstrom 37 gekoppelter Leistungsüberschuß. Daher wird mit einem einer Aufbereitung 7 unterzogenen Wasserstrom 70 unter Berücksichtigung des Feuerungswirkungsgrades im Wärmeübertrager 8 ein Heißdampfstrom erzeugt. Wird der Dampfstrom 21, welcher der Reaktionszone 2 zugeführt wird, dem in 8 erzeugten Heißdampfstrom entnommen, verbleibt ein Heißdampfstrom 71 mit einer Leistung von 0,45 MW, der über eine Turbine 9 entspannt wird.

Die Pyrolysegase 13 werden unter Zuführung des Reaktionsmittels Wasserdampf 21 in die Reaktionszone 2, bestehend aus einem Wärmeübertrager, der mit einem Katalysator zur Verbesserung der Teercrackung bestückt ist, geleitet. Die für die Reaktion des Pyrolysegases 13 mit dem Wasserdampf 21 benötigte Energie wird über den heißen Rauchgasstrom 36 aus der Verbrennungswirbelschicht 3 an den Wärmeübertrager 2 abgegeben, wobei die Reaktion je nach Betriebsführung der Verbrennungswirbelschicht 3 bei 850°C bis 900°C stattfindet. Für eine weitere Temperaturerhöhung durch eine partielle Verbrennung des Pyrolysegases kann dem Reaktionsmittel Wasserdampf 21 auch Luft oder Sauerstoff zugemischt werden. Das erhaltene Produktgas 23 besitzt einen Heizwert von 9,87 MJ/m³(V_{N}) und setzt sich aus folgenden Gaskomponenten zusammen: 48,7 Vol.-% H₂, 36,1 Vol.-% CO, 0,1 Vol.-% CH₄, 6,1 Vol.% CO₂, 9 Vol.-% H₂0. Das Produktgas 23 wird anschließend in einer Aufbereitungsstufe 5 entstaubt und gequencht. Der Kaltgaswirkungsgrad, also die chemische Energie des Einsatzstoffes bezogen auf den chemischen Energieinhalt des Produktgases, beträgt 80,8 %.

Figur 3 zeigt beispielhaft skizziert eine bevorzugte Ausführungsform der erfindungsgemäßen Vorrichtung zur Pyrolyse und Vergasung. Das Holz 10 wird über eine gasdichte Eintragsvorrichtung, im hier beispielhaft dargestellten Fall eine Zellradschleuse, in den Pyrolysereaktor 1 gegeben. Die Trocknung und Pyrolyse des Einsatzstoffes findet durch den Kontakt mit dem durch einen Überlauf aus der Verbrennungswirbelschicht 3 zugeführten heißen Wirbelbettmaterial 35 statt. Das entstandene Pyrolysegas 13 wird unter Zugabe von Wasserdampf 21 in die Reaktionszone 2 geleitet, die hier beispielhaft als Röhrenwärmeübertrager ausgebildet ist. Nach Umsetzung des Pyrolysegases mit dem Wasserdampf 21 wird das Produktgas 23 in der Aufbereitungsstufe 5 gekühlt und gereinigt. Um den unerwünschten Austausch von Gasen zwischen Pyrolysereaktor 1 und Verbrennungswirbelschicht 3 zu vermeiden, sind das Gebläse der Produktgasleitung 50 und das Gebläse der Rauchgasleitung 60 aufeinander abzustimmen. Dadurch, dass der Überlauf von der Verbrennungswirbelschicht 3 zum Pyrolysereaktor 1 so gestaltet ist, dass dieser ständig mit Wirbelbettmaterial 35 gefüllt ist, wird in Kombination mit den genannten Gebläsen der Austausch von Gas zwischen beiden Reaktoren auf einfache Weise verhindert. Zum Transport des Gemischs aus festem Pyrolyserückstand und zirkulierendem Wirbeibettmaterial 14 in die Verbrennungswirbelschicht 3 ist vorzugsweise eine Schnecke vorgesehen. Die Schnecke ist so auszulegen, dass der Druckverlust durch die mit Material gefüllten Schneckengänge größer ist als über der Wirbelschicht 3, so dass die der Verbrennungswirbelschicht 3 zugeführte Luft 31 nicht im Bypass durch den Pyrolysereaktor 1 strömt. Mit der Wärme des Rauchgasstroms 37 wird über einen Wärmeübertrager 8 aus einem Wasserstrom 70 ein Dampfstrom 71 erzeugt, der beispielsweise über eine Turbine 9 entspannt wird. Ein Teil des Dampfstroms 71 kann als Wasserdampf 21 für die Reaktionszone 2 verwendet werden. Das Abgas 60 wird einer Rauchgasreinigung 6 zugeführt.

### Bezugszeichenliste:

- 1: Pyrolysereaktor
- 10: Einsatzstoff
- 11: Reaktionsmittel
- 12: Wärmeverlust
- 13: Pyrolysegas
- 14: Gemisch aus festem Pyrolyserückstand und Wirbelbettmaterial
- 15: Pyrolysegas
- 2: Reaktionszone
- 21: Reaktionsmittel
- 22: Wärmeverlust
- 23: Produktgas
- 3: Feuerung
- 31: Luft
- 32: Wirbelbettmaterial
- 33: Wärmeverlust
- 34: Wärmestrom
- 35: Wirbelbettmaterial
- 36: Wärmestrom
- 37: Verbrennungsabgas
- 4: Vorbehandlungsstufe
- 5: Gasreinigung
- 50: gereinigtes Produktgas
- 6: Rauchgasreinigung
- 60: Abgas
- 7: Wasseraufbereitung
- 70: Wasser
- 71: Dampf
- 8: Wärmeübertrager
- 9: Turbine

## Patentansprüche

1. Verfahren zur Pyrolyse und Vergasung von organischen Stoffen oder Stoffgemischen, bei dem
die organischen Stoffe in einen Trocknungs- und Pyrolysereaktor (1) eingebracht werden, in dem die organischen Stoffe mit dem Wirbelbettmaterial (35) der Verbrennungswirbelschicht (3) in Kontakt gebracht werden oder in dem die organischen Stoffe mit dem Wirbelbettmaterial (35) und der Reaktorwandung der Verbrennungswirbelschicht (3) in Kontakt gebracht werden, wodurch eine Trocknung und Pyrolyse stattfindet, bei der die organischen Stoffe in Wasserdampf aus der Trocknung und Pyrolyseprodukte (13) umgesetzt werden, wobei die Pyrolyseprodukte aus Gasen mit kondensierbaren Substanzen und festem kohlenstoffhaltigem Rückstand bestehen;
der feste kohlenstoffhaltige Rückstand oder der feste kohlenstoffhaltige Rückstand und Anteile des Wasserdampfs und der Pyrolysegase mit kondensierbaren Substanzen und das Wirbelbettmaterial zurück in die Verbrennungswirbelschicht (3) geführt werden, in der der kohlenstoffhaltige Rückstand der organischen Stoffe verbrannt, das Wirbelbettmaterial aufgeheizt und wieder in den Pyrolysereaktor (1) geführt wird;
der Wasserdampf aus der Trocknung und die Pyrolysegase (13) mit kondensierbaren Substanzen in einer weiteren Reaktionszone (2) derart nachbehandelt werden, dass ein Produktgas (23) mit hohem Heizwert zur Verfügung steht;
die Trocknung und Pyrolyse in mindestens einem oder mehreren Pyrolysereaktoren (1) durchgeführt werden;
die Verbrennungswirbelschicht (3), in der die Pyrolyserückstände verbrannt werden, als stationäre Wirbelschicht betrieben wird;
die Pyrolysegase (13) in einen indirekten Wärmetauscher (2) geleitet werden;
die Feuerungsabgase (37) oder die Feuerungsabgase und das Wirbelbettmaterial der Verbrennungswirbelschicht (3) so mit dem indirekten Wärmetauscher (2) in Kontakt gebracht werden, dass deren Wärmeinhalt für die Reaktion der Pyrolysegase (13) mit dem Reaktionsmittel (21) genutzt wird;
das Wirbelbettmaterial (3) nur aus der Asche der organischen Stoffe
oder aus der Asche und unverbrannten kohlenstoffhaltigen Rückständen der organischen Stoffe
oder aus der Asche der organischen Stoffe und zusätzlichem Wirbelbettmaterial
oder aus der Asche und unverbrannten kohlenstoffhaltigen Rückständen der organischen Stoffe und zusätzlichem Wirbelbettmaterial besteht.

2. Verfahren nach Anspruch 1, **dadurch gekennzeichnet, daß** die Trocknung und Pyrolyse in zwei oder mehreren Pyrolysereaktoren (1) durchgeführt werden, die aus zwei oder mehreren Wanderbettreaktoren oder aus zwei oder mehreren Drehrohrreaktoren oder aus Drehrohrreaktoren und Wanderbettreaktoren bestehen.

3. Verfahren nach Anspruch 1 oder 2, **dadurch gekennzeichnet, daß** den Pyrolysegasen (13) kein Reaktionsmittel zugeführt wird.

4. Verfahren nach Anspruch 1 oder 2, **dadurch gekennzeichnet, daß** den Pyrolysegasen (13) ein Reaktionsmittel wie Wasserdampf, Sauerstoff oder Luft oder eine Mischung daraus zugeführt wird.

5. Verfahren nach einem der vorhergehenden Ansprüche, **dadurch gekennzeichnet, daß** die Pyrolysegase (13) in dem indirekten Wärmetauscher (2) mit dem Reaktionsmittel (21) reagieren.

6. Verfahren nach einem der vorhergehenden Ansprüche, **dadurch gekennzeichnet, dass** die Pyrolyse bei einer Temperatur von 450°C bis 750°C durchgeführt wird.

7. Verfahren nach einem der vorhergehenden Ansprüche, **dadurch gekennzeichnet, dass** Produktgas (23) in den Pyrolysereaktor (1) zurückgeführt wird.

8. Verfahren nach einem der vorhergehenden Ansprüche, **dadurch gekennzeichnet, dass** Reaktionsmittel (21) wie Wasserdampf, Sauerstoff oder Luft oder eine Mischung daraus in den Pyrolysereaktor (1) gegeben werden.

9. Verfahren nach einem der vorhergehenden Ansprüche, **dadurch gekennzeichnet, dass** die Oberfläche der Reaktorwandung der Verbrennungswirbelschicht (3) auf der Seite des Pyrolysereaktors (1) und der Verbrennungswirbelschicht (3) eine beliebige geschlossene geometrische Form besitzt.

10. Verfahren nach einem der vorhergehenden Ansprüche, **dadurch gekennzeichnet, dass** die Reaktionen der Pyrolysegase (13) mit dem Reaktionsmittel (21) bei Temperaturen von 800°C bis 1050°C durchgeführt werden.

11. Verfahren nach einem der vorhergehenden Ansprüche, **dadurch gekennzeichnet, dass** die Reaktionen der Pyrolysegase (13) mit dem Reaktionsmittel (21) in Gegenwart eines Katalysators durchgeführt werden.

12. Verfahren nach einem der vorhergehenden Ansprüche, dass die Reaktionen (13) mit dem Reaktionsmittel (21) in einem Festbett aus Katalysatormaterial durchgeführt werden.

13. Verfahren nach einem der vorhergehenden Ansprüche, **dadurch gekennzeichnet, dass** die Reaktionen der Pyrolysegase (13) mit dem Reaktionsmittel (21) in einer Wirbelschicht aus Katalysatormaterial durchgeführt werden.

14. Verfahren nach einem der vorhergehenden Ansprüche, **dadurch gekennzeichnet, dass** die Reaktionen der Pyrolysegase (13) mit dem Reaktionsmittel (21) in Gegenwart eines dem Pyrolysegas (13) im Flugstrom zugegebenen Katalysators durchgeführt werden.

15. Vorrichtung zur Durchführung eines Verfahrens zur Pyrolyse und Vergasung von organischen Stoffen oder Stoffgemischen, insbesondere zur Durchführung eines Verfahrens nach einem oder mehreren der Ansprüche 1 bis 14, mit einem Pyrolysereaktor (1), einer Wirbelschichtfeuerung (3) für den Pyrolyserückstand, einer Reaktionszone (2) für die Pyrolysegase (13) und einem Wirbelbettmaterialkreislauf zwischen Verbrennungswirbelschicht (3) und Pyrolysereaktor (1),
**dadurch gekennzeichnet,**
**dass** ein Schachtreaktor oder ein Drehrohrreaktor mit einer Schleuse für den Einsatzstoff und einem Zulauf für das Wirbelbettmaterial aus der Verbrennungswirbelschicht (3) neben der Verbrennungswirbelschicht angeordnet ist, daß der Schachtreaktor (1) an seinem unteren Ende eine Transportvorrichtung in die Verbrennungswirbelschicht aufweist, daß die Verbrennungswirbelschicht (3) einen Überlauf zur Übermittlung des Wirbelbettmaterials in den Schachtreaktor (1) aufweist und daß die Abgase (37) der Verbrennungswirbelschicht (3) einem Wärmeübertrager (2) zuführbar sind, der für die Pyrolysegase (13) mit dem Schachtreaktor (1) verbunden ist.

16. Vorrichtung nach Anspruch 15, **dadurch gekennzeichnet, dass** der Verbrennungswirbelschicht (3) an mindestens einer Stelle oder an mehreren Stellen Wirbelbettmaterial entnehmbar und in den Pyrolysereaktor führbar ist.

17. Vorrichtung nach Anspruch 15 oder 16, **dadurch gekennzeichnet, dass** der Verbrennungswirbelschicht (3) an mindestens einer Stelle oder an mehreren Stellen Wirbelbettmaterial mittels eines oder mehrerer Überlaufe entnehmbar und in den Pyrolysereaktor führbar ist.

18. Vorrichtung nach einem der Ansprüche 10 bis 13, **dadurch gekennzeichnet, dass** zur Ausbildung einer Wirbelschicht feuerfeste Stoffe zugebbar sind.

19. Vorrichtung nach einem der Ansprüche 15 bis 18, **dadurch gekennzeichnet, dass** zur Ausbildung einer Wirbelschicht die unverbrennbaren und unvergasbaren Bestandteile des Einsatzstoffes verwendbar sind.

## Claims

1. A method for the pyrolysis and gasification of organic substances or mixtures of organic substances, wherein
the organic substances are introduced into a drying and pyrolysis reactor (1) in which the organic substances are brought into contact with the fluidized-bed material (35) of the combustion fluidized-bed (3) or in which the organic substances are brought into contact with the fluidized-bed material (35) and the reactor wall of the combustion fluidized-bed (3), whereby a drying and pyrolysis take place, in which the organic substances are transformed into steam from the drying and into pyrolysis products (13), wherein the pyrolysis products consist of gases with condensable substances and solid carbonaceous residue;
the solid carbonaceous residue or the solid carbonaceous residue and portions of the steam and of the pyrolysis gases with condensable substances and the fluidized-bed material are guided back into the combustion fluidized-bed (3) in which the carbonaceous residue of the organic substances is incinerated, the fluidized-bed material is heated up and is again guided into the pyrolysis reactor (1);
the steam from the drying and the pyrolysis gases (13) are treated with condensable substance in a further reaction zone (2) such that a product gas (23) with a high calorific value is available;
the drying and pyrolysis are carried out in at least one or more pyrolysis reactors (1);
the combustion fluidized-bed (3), in which the pyrolysis residues are incinerated, is operated as a stationary fluidized-bed;
the pyrolysis gases (13) are guided into an indirect heat exchanger (2);
the firing waste gases (37) or the firing waste gases and the fluidized-bed material of the combustion fluidized-bed (3) are brought into contact with the indirect heat exchanger (2) such that their thermal content is used for the reaction of the pyrolysis gases (13) with the gasification agent (21);
the fluidized-bed material (3) consists only of the ash of the organic substances, or of the ash and unburned carbonaceous residues of the organic substances,
or of the ash of the organic substances and of additional fluidized.bed material,
or of the ash and unburned carbonaceous residues of the organic substances and of additional fluidized-bed material.

2. A method in accordance with claim 1, **characterized in that** the drying and pyrolysis are carried out in two or more pyrolysis reactors (1) which consist of two or more moving bed reactors or of two or more rotating tubular reactors or of rotating tubular reactors and moving bed reactors.

3. A method in accordance with either of claims 1 or 2, **characterized in that** no reactant is supplied to the pyrolysis gases (13).

4. A method in accordance with either of claims 1 or 2, **characterized in that** a reactant such as steam, oxygen or air or a mixture thereof is supplied to the pyrolysis gases (13).

5. A method in accordance with any one of the preceding claims, **characterized in that** the pyrolysis gases (13) react with the reactant (21) in the indirect heat exchanger (2).

6. A method in accordance with any one of the preceding claims, **characterized in that** the pyrolysis is carried out at a temperature of 450° C to 750° C.

7. A method in accordance with any one of the preceding claims, **characterized in that** the product gas (23) is led back into the pyrolysis reactor (1).

8. A method in accordance with any one of the preceding claims, **characterized in that** reactants (21) such as steam, oxygen or air or a mixture thereof are added into the pyrolysis reactor (1).

9. A method in accordance with any one of the preceding claims, **characterized in that** the surface of the reactor wall of the combustion fluidized-bed (3) has any closed geometrical shape on the side of the pyrolysis reactor (1) and the combustion fluidized-bed (3).

10. A method in accordance with any one of the preceding claims, **characterized in that** the reactions of the pyrolysis gases (13) with the reactant (21) are carried out at temperatures of 800°C to 1,050°C.

11. A method in accordance with any one of the preceding claims, **characterized in that** the reactions of the pyrolysis gases (13) with the reactant (21) are carried out in the presence of a catalyst.

12. A method in accordance with any one of the preceding claims, **characterized in that** the reactions (13) with the reactant (21) are carried out in a solid bed of catalyst material.

13. A method in accordance with any one of the preceding claims, **characterized in that** the reactions of the pyrolysis gases (13) with the reactant (21) are carried out in a fluidized-bed of catalyst material.

14. A method in accordance with any one of the preceding claims, **characterized in that** the reactions of the pyrolysis gases (13) with the reactant (21) are carried out in the presence of a catalyst added to the pyrolysis gas (13) in the entrained flow.

15. An apparatus for the carrying out of a method for the pyrolysis and gasification of organic substances or mixtures of organic substances, in particular for the carrying out of a method in accordance with one or more of the claims 1 to 14, comprising a pyrolysis reactor (1), a fluidized-bed firing (3) for the pyrolysis residue, a reaction zone (2) for the pyrolysis gases (13) and a fluidized-bed material circulation between the combustion fluidized-bed (3) and the pyrolysis reactor (1),
**characterized in that**
a shaft reactor or a rotating tubular reactor having a sluice for the application material and an inflow for the fluidized-bed material from the combustion fluidized bed (3) is arranged next to the combustion fluidized bed; **in that** the shaft reactor (1) has at its lower end a transport apparatus into the combustion fluidized bed; **in that** the combustion fluidized bed (3) has an overflow for transferring the fluidized bed material into the shaft reactor (1); and **in that** the waste gases (37) of the combustion fluidized bed (3) can be supplied to a heat transfer member (2) which is connected to the shaft reactor (1) for the pyrolysis gases (13).

16. An apparatus in accordance with claim 15, **characterized in that** fluidized-bed material (3) can be removed from the combustion fluidized bed (3) at least at one point or at a plurality of points and can be led into the pyrolysis reactor.

17. An apparatus in accordance with either of claims 15 or 16, **characterized in that** fluidized bed material can be removed from the combustion fluidized bed (3) at at least one point or at a plurality of points by means of one or more overflows and can be led into the pyrolysis reactor.

18. An apparatus in accordance with one of the claims 10 to 13, **characterized in that** refractory substances can be added to form a fluidized bed.

19. An apparatus in accordance with one of the claims 15 to 18, **characterized in that** the components of the application material which cannot be burned and which cannot be gasified can be used to form a fluidized bed.

## Revendications

1. Procédé de pyrolyse et de gazéification de substances organiques ou de mélanges de substances organiques, lors duquel
les substances organiques sont chargées dans un réacteur de séchage et de pyrolyse (1), dans lequel les substances organiques sont mises en contact avec la matière du lit fluidisé (35) du combustible fluidisé de combustion (3) ou dans lequel les substances organiques sont mises en contact avec la matière du lit fluidisé (35) et la paroi du réacteur du combustible fluidisé de combustion (3), par quoi un séchage et une pyrolyse ont lieu, pendant lesquels les substances organiques sont transformées en vapeur d'eau issue du séchage et en produits de pyrolyse (13), sachant que les produits de pyrolyse se composent de gaz issus de substances condensables et de résidus solides à base de carbone ;
les résidus solides à base de carbone ou les résidus solides à base de carbone et les proportions de la vapeur d'eau et des gaz de pyrolyse sont réintroduits avec les substances condensables et la matière du lit fluidisé dans le combustible fluidisé de combustion (3), dans lequel les résidus à base de carbone des substances organiques sont brûlés, la matière du lit fluidisé échauffée et réintroduits dans le réacteur de pyrolyse (1) ;
la vapeur d'eau issue du séchage et les gaz de pyrolyse (13) sont retraités avec des substances condensables dans une autre zone de réaction (2) de sorte qu'un gaz produit (23) à haute valeur calorifique est disponible ;
le séchage et la pyrolyse sont effectués dans au moins un réacteur de pyrolyse ou plus (1);
le combustible fluidisé de combustion (3), dans lequel sont brûlés les résidus de pyrolyse, est exploité comme combustible fluidisé stationnaire ;
les gaz de pyrolyse (13) sont dirigés dans un échangeur thermique indirect (2) ;
les fumées de combustion (37) ou les fumées de combustion et la matière du lit fluidisé du combustible fluidisé de combustion (3) sont mises en contact avec l'échangeur thermique indirect (2) de sorte que leur capacité thermique est utilisée pour la réaction du gaz de pyrolyse (13) avec l'agent réactif (21) ;
la matière du lit fluidisé (3) est constituée uniquement des cendres des substances organiques
ou des cendres et des résidus non brûlés à base de carbone des substances organiques,
ou des cendres des substances organiques et de la matière supplémentaire du lit fluidisé
ou des cendres et des résidus non brûlés à base de carbone des substances organiques et de la matière supplémentaire du lit fluidisé.

2. Procédé selon la revendication 1, **caractérisé en ce que** le séchage et la pyrolyse sont effectués dans deux réacteurs de pyrolyse (1) ou plus, qui se constituent de deux réacteurs à lit mobile ou plus, ou de deux réacteurs tubulaires rotatifs ou plus ou de réacteurs tubulaires rotatifs et de réacteurs à lit mobile.

3. Procédé selon les revendications 1 ou 2, **caractérisé en ce qu'**aucun agent réactif n'est introduit dans les gaz de pyrolyse (13).

4. Procédé selon les revendications 1 ou 2, **caractérisé en ce qu'**un agent réactif, comme de la vapeur d'eau, de l'oxygène, de l'air ou un mélange de ces matières, est introduit dans les gaz de pyrolyse (13).

5. Procédé selon l'une des revendications précédentes, **caractérisé en ce que** les gaz de pyrolyse (13) réagissent avec l'agent réactif (21) dans l'échangeur thermique indirect (2).

6. Procédé selon l'une des revendications précédentes, **caractérisé en ce que** la pyrolyse est effectuée à une température de 450°C à 750°C.

7. Procédé selon l'une des revendications précédentes, **caractérisé en ce que** le gaz produit (23) est réintroduit dans le réacteur de pyrolyse (1).

8. Procédé selon l'une des revendications précédentes, **caractérisé en ce qu'**un agent réactif (21) comme de la vapeur d'eau, de l'oxygène, de l'air ou un mélange de ces matières, est introduit dans le réacteur de pyrolyse (1).

9. Procédé selon l'une des revendications précédentes, **caractérisé en ce que** la surface de la paroi du réacteur du combustible fluidisé de combustion (3) possède une forme géométrique fermée quelconque sur le côté du réacteur de pyrolyse (1) et du combustible fluidisé de combustion (3).

10. Procédé selon l'une des revendications précédentes, **caractérisé en ce que** les réactions des gaz de pyrolyse (13) avec l'agent réactif (21) sont effectuées à des températures de 800°C à 1050°C.

11. Procédé selon l'une des revendications précédentes, **caractérisé en ce que** les réactions des gaz de pyrolyse (13) avec l'agent réactif (21) sont effectuées en présence d'un catalysateur.

12. Procédé selon l'une des revendications précédentes, **caractérisé en ce que** les réactions des gaz de pyrolyse (13) avec l'agent réactif (21) sont effectuées dans un lit fixe de matière catalysatrice.

13. Procédé selon l'une des revendications précédentes, **caractérisé en ce que** les réactions des gaz de pyrolyse (13) avec l'agent réactif (21) sont effectuées dans un combustible fluidisé de matière catalysatrice.

14. Procédé selon l'une des revendications précédentes, **caractérisé en ce que** les réactions des gaz de pyrolyse (13) avec l'agent réactif (21) sont effectuées en présence d'un catalysateur ajouté au gaz de pyrolyse (13) dans le courant de vol.

15. Dispositif destiné à l'exécution d'un procédé de pyrolyse et de gazéification de substances organiques ou de mélanges de substances organiques, notamment pour l'exécution d'un procédé selon une des revendications 1 à 14 ou plus, doté d'un réacteur de pyrolyse (1), d'un chauffage du combustible fluidisé (3) destiné aux résidus de pyrolyse, d'une zone de réaction (2) destinée aux gaz de pyrolyse (13) et d'un circuit de matière de lit fluidisé entre le combustible fluidisé de combustion (3) et le réacteur de pyrolyse (1),
**caractérisé,**
**en ce qu**'un réacteur à cuve ou un réacteur tubulaire rotatif est disposé près du combustible fluidisé de combustion avec un sas destiné à la substance employée et une alimentation destinée à la matière du lit fluidisé issue du combustible fluidisé de combustion (3), en ce que le réacteur à cuve (1) présente à son extrémité inférieure un dispositif de transport dans le combustible fluidisé de combustion, en ce que le combustible fluidisé de combustion (3) présente une surverse pour la transmission de la matière du lit fluidisé dans le réacteur à cuve (1) et en ce que les fumées (37) du combustible fluidisé de combustion (3) sont conductibles dans un caloporteur (2) qui est relié pour les gaz de pyrolyse (13) avec le réacteur à cuve (1).

16. Dispositif selon la revendication 15, **caractérisé en ce que** dans au moins une ou plusieurs zones du combustible fluidisé de combustion (3), de la matière du lit fluidisé est prélevable et conductible dans le réacteur de pyrolyse.

17. Dispositif selon les revendications 15 ou 16, **caractérisé en ce que** dans au moins une ou plusieurs zones du combustible fluidisé de combustion (3), de la matière du lit fluidisé est prélevable à l'aide d'une de plusieurs surverses et conductible dans le réacteur de pyrolyse.

18. Dispositif selon l'une des revendications 10 à 13, **caractérisé en ce que** pour constituer un combustible fluidisé, des matières incombustibles sont ajoutables.

19. Dispositif selon l'une des revendications 15 à 18, **caractérisé en ce que** pour constituer un combustible fluidisé, les composants incombustibles et ingazéifiables de la substance employée sont utilisables.
